# EUROPÄISCHE PATENTSCHRIFT

(11) **EP 1 210 253 B1**
(45) Veröffentlichungstag und Bekanntmachung des Hinweises auf die Patenterteilung: **26.03.2003**
(21) Anmeldenummer: 00953090.8
(22) Anmeldetag: 26.07.2000
(51) Int. Cl.: B60R 25/00, E05B 49/00

(54) **ANORDNUNG ZUR STEUERUNG EINER VERRIEGELUNGSVORRICHTUNG EINES FAHRZEUGES**
ARRANGEMENT FOR CONTROLLING A LOCKING DEVICE OF A VEHICLE
SYSTEME DE COMMANDE D'UN DISPOSITIF DE VERROUILLAGE D'UN VEHICULE

(30) Priorität: 20.08.1999 DE 19939550
(43) Veröffentlichungstag der Anmeldung: 05.06.2002
(73) Patentinhaber: Volkswagen Aktiengesellschaft, 38436 Wolfsburg (DE)
(72) Erfinder: BURNUS, Oliver, D-29393 Gross Oesingen (DE)
(86) Internationale Anmeldenummer: EP0007145
(87) Internationale Veröffentlichungsnummer: WO01014177

(56) Entgegenhaltungen:
- EP-A- 0 897 841
- EP-B- 0 158 354
- DE-C- 19 833 451

## Beschreibung

Die Erfindung betrifft eine Anordnung zur Steuerung einer Verriegelungsvorrichtung eines Fahrzeuges, durch welche Fahrzeugteile wie Türen, Kofferraumdeckel, Alarmanlage, Zündanlage, Lenkradschloß betätigbar sind, mit mindestens zwei tragbaren Fembedienungseinrichtungen, durch welche die Verriegelungsvorrichtung steuerbar ist, mit einer Erkennungseinrichtung, durch welche ein Insasse im Fahrgastraum erkennbar ist, mit einer Sensoreinrichtung, durch welche eine tragbare Fembedienungseinrichtung im Fahrzeug feststellbar ist, sowie mit einer Detektoreinrichtung, durch welche der Betriebszustand der Fahrzeugteile erfaßbar ist.

Eine derartige Anordnung ist aus der EP-0 158 354 B1 bekannt. Bei dieser bekannten Anordnung wird bei einer Verriegelung der Fahrzeugtüren überprüft, ob sich noch eine Fembedienungseinrichtung im Fahrzeug befindet. Wenn im Fahrzeug noch eine Fernbedienungseinrichtung festgestellt wird, wird ein Signal gegeben, und die Fahrzeugtür wird zunächst nicht verriegelt. Eine Verriegelung der Fahrzeugtür findet erst dann statt, wenn die Fembedienungseinrichtung nach einer vorbestimmten Zeit noch immer nicht aus dem Fahrzeug entfernt wurde. Diese bekannte Anordnung verfügt außerdem über eine Abschalteinrichtung, die aktiviert wird, wenn die Fahrzeugtüren geschlossen und die Türschlösser verriegelt sind. Wenn die Abschalteinrichtung aktiviert ist, antwortet sie für eine Zeitperiode, die länger ist als eine vorbestimmte Zeitperiode, auf ein kodiertes Signal von der Fembedienungseinrichtung, um eine Steuereinheit abzuschalten, wobei die Abschalteinrichtung die Anwesenheit eines Insassen in dem Fahrzeug erfaßt und in diesem Fall nicht erregt bleibt.

Weiterhin ist aus der DE 42 40 426 C2 ein Verfahren zum Erkennen eines im Fahrzeuginneren eingeschlossenen, tragbaren, schlüsselseitigen Systemteils der Zentralverriegelungsanlage für Kraftfahrzeuge bekannt. Bei diesem bekannten Verfahren wird durch eine im Innenraum installierte Einheit überprüft, ob sich ein schlüsselseitiges Systemteil im Fahrzeug befindet, wenn eine Türverriegelung betätigt wird. Wenn ein solches Systemteil festgestellt wird, wird ein Alarm ausgelöst, der den Fahrer darauf aufmerksam machen soll, das Systemteil aus dem verriegelten Fahrzeug zu entfernen. Außerdem wird in diesem Fall die Zentralverriegelung automatisch entriegelt.

Weiterhin ist aus der DE 41 23 654 A1 ein Verfahren zum Erkennen eines im Fahrzeuginneren eingeschlossenen, tragbaren Transponders für ein schlüsselloses Zutrittssystem für Fahrzeuge bekannt, bei dem über einen beim Verriegeln ausgelösten Frage-Antwort-Dialog die Position des Transponders bekannt wird und gegebenenfalls ein Signal ausgelöst wird. Dieses bekannte Verfahren zeichnet sich dadurch aus, daß der Dialog mit einem Verriegelungsbefehl ausgelöst wird und die Verriegelung erst durchgeführt wird, wenn der Transponder außerhalb des Fahrzeugs erkannt wird.

Weiterhin ist aus der EP 0 140 137 B1 ein schlüsselloses Zugangssystem für Kraftfahrzeuge bekannt, durch welches eine versehentlich im Fahrzeug zurückgelassene Fembedienungseinrichtung festgestellt werden kann. Dazu wird ein Signalpegeldetektor verwendet, der auf eine Signalpegel-Änderung des Codesignals anspricht, welches von der tragbaren Fernbedienungseinrichtung ausgesendet wird. Wenn die Gesamtänderung im Pegel des Codesignals über eine vorgegebene Zeitspanne geringer ist als ein vorgegebener Wert, wird von dem System daraus der Schluß gezogen, daß die Fernbedienungseinrichtung im Fahrzeug vergessen wurde. Es wird dann ein Alarm ausgelöst.

Weiterhin ist aus der EP 0 787 875 A2 ein schlüsselloses Zutrittssystem für ein Fahrzeug mit einer Mehrzahl von Berechtigungskarten bekannt. Bei Anwesenheit von mindestens einer Berechtigungskarte werden die Fahrzeugtüren entriegelt. Wenn die letzte Berechtigungskarte aus dem Bereich des Fahrzeugs entfernt wird, erhält ein fahrzeugseitiges Systemteil kein Antwortsignal mehr und aktiviert daraufhin die Zentralverriegelung.
Schließlich beschreibt die EP 0 154 306 B1 ein schlüsselloses Zugangssystem für ein Kraftfahrzeug mit einer Vorrichtung gegen das Zurücklassen einer Berechtigungskarte im Fahrzeug. Wenn eine Berechtigungskarte im Fahrzeug eingeschlossen wird, so wird nach einer vorgegebenen Zeit ein Alarmsignal ausgelöst. Das Fahrzeug kann dann für eine begrenzte Zeit ohne Schlüssel oder Berechtigungskarte geöffnet werden. Wenn diese Zeit verstrichen ist, verriegelt das System die Fahrzeugtüren. Die Fahrzeugtüren lassen sich dann nur noch mit Hilfe eines mechanischen Schlüssels öffnen.

Der Erfindung liegt die **Aufgabe** zugrunde, eine Anordnung der im Oberbegriff des Anspruchs 1 genannten Art zu schaffen, durch welche für ein abgestelltes Fahrzeug sowie für eventuell in diesem Fahrzeug zurückgelassene Insassen ein besonders hohes Maß an Sicherheit gegen unbefugte Eingriffe von außen erreichbar ist.

Zur Lösung dieser Aufgabe sieht die Erfindung vor, daß eine logische Schaltung vorgesehen ist, durch welche dann, wenn eine erste tragbare Fernbedienungseinrichtung aus dem Fahrzeug entfernt wurde und wenigstens eine zweite tragbare Fernbedienungseinrichtung im Fahrzeug registriert wird, die zweite tragbare Fernbedienungseinrichtung unter der Bedingung deaktiviert wird, daß kein Insasse im Fahrgastraum erkannt wird, während bei Anwesenheit eines Insassen im Fahrgastraum die zweite tragbare Fembedienungseinrichtung aktiviert bleibt.

Die Erfindung löst somit das Problem, welches auftritt, wenn für ein Fahrzeug mehrere Fernbedienungseinrichtungen ausgegeben sind und beim Parken oder Abstellen des Fahrzeugs zwar eine dieser Fernbedienungseinrichtungen vom Fahrer mitgenommen wird, jedoch eine weitere Fernbedienungseinrichtung unter Umständen versehentlich im Fahrzeug zurückgelassen wird.

In der vorliegenden Beschreibung wird allgemein als "Fernbedienungseinrichtung" (ID-Geber) eine solche Einrichtung bezeichnet, die dazu dient, verschiedene Funktionen elektronisch auszuführen, die zum Teil durch einen mechanischen Schlüssel erfüllt werden können. Die Fembedienungseinrichtung könnte auch als Transponder, Zugangs-Berechtigungskarte, elektronischer Schlüssel, als schlüsselseitiges Systemteil einer Zentralverriegelungsanlage, als Identifikationsausweis oder als Identifikationsgeber (ID-Geber) bezeichnet werden. Je nach Verwendungszweck und Zuordnung bestimmter Funktionen sind verschiedene Bezeichnungen üblich.

Zur Terminologie sei noch erläutert, daß in der vorliegenden Beschreibung der Begriff "Verriegelungsvorrichtung" allgemein für eine beliebige Vorrichtung verwendet wird, die dazu dient, entweder elektrisch, mechanisch oder elektromechanisch, unter Umständen auch pneumatisch oder hydraulisch eine Funktion an einem beliebigen Fahrzeugteil vorzunehmen, um eine Abschaltung, eine Blockierung, eine Deaktivierung, eine Ausschaltung oder eine ähnliche Funktion auszuüben. Das von einer solchen Verriegelungsvorrichtung betätigbare Teil kann eine Fahrzeugtür, ein Kofferraumdeckel, ein Deckel für eine Kraftstoffeinfüllöffnung, eine Alarmanlage, eine Zündanlage, ein Lenkradschloß, eine Klimaanlage oder ein ähnliches Aggregat sein.

Nach dem Grundgedanken der Erfindung wird durch eine besonders glückliche Merkmalskombination in sehr vorteilhafter Weise das technische Problem überwunden, welches dann auftritt, wenn ein erster ID-Geber aus dem Fahrzeug entfernt wird, und ein zweiter ID-Geber im Fahrzeug verbleibt, wobei gemäß der Erfindung zugleich auch die Situation gemeistert wird, daß außer dem zweiten ID-Geber Insassen im Fahrzeug verblieben sind. Gemäß der Erfindung wird nämlich vermieden, daß eine im Fahrzeug verbliebene Person durch eine Verriegelung der Fahrzeugtüren eingesperrt wird, und es wird zugleich sichergestellt, daß diese Person, falls sie zum Fahren des Fahrzeugs berechtigt ist, mit dem im Fahrzeug verbliebenen ID-Geber das Fahrzeug fahren kann.

Weiterhin wird gemäß der Erfindung der wesentliche Vorteil erreicht, daß kein Fahrzeugdieb, der sich unter Umständen gewaltsam Zutritt zum Fahrzeug verschafft, eventuell unter Auslösung eines Alarms mit dem Fahrzeug wegfahren könnte, weil der im Fahrzeug verbliebene ID-Geber deaktiviert wurde.

Gemäß einer vorteilhaften Weiterbildung der erfindungsgemäßen Anordnung ist vorgesehen, daß die logische Schaltung derart ausgelegt ist, daß durch die erste tragbare Fernbedienungseinrichtung eine Tür-Verriegelungsvorrichtung schließbar ist, wenn die erste tragbare Fembedienungseinrichtung aus dem Fahrzeug entfernt wurde, und es kann dabei die Anordnung vorzugsweise derart getroffen sein, daß die Tür-Verriegelungsvorrichtung geschlossen wird, wenn kein Insasse im Fahrgastraum erkannt wird. Dadurch wird sichergestellt, daß ein abgestelltes Fahrzeug stets ordnungsgemäß verschlossen und verriegelt ist.

Eine weitere vorteilhafte Ausgestaltung der erfindungsgemäßen Anordnung sieht vor, daß die Tür-Verriegelungsvorrichtung geschlossen wird, wenn ein Insasse im Fahrgastraum erkannt und der logischen Schaltung innerhalb einer vorgebbaren Zeit von dem Insassen kein Quittungssignal zugeführt wird.

Durch diese Maßnahme wird erreicht, daß näher ermittelt wird, welche Art von Insassen sich unter Umständen im Fahrzeug befinden. Wenn nämlich beispielsweise ein Beifahrer im Fahrzeug sitzt, der zum Fahren des Fahrzeugs berechtigt ist, ist er ohne weiteres in der Lage, innerhalb der vorgebbaren Zeit von sich aus über eine geeignete Einrichtung im Fahrzeug ein Quittungssignal abzugeben. Auf diese Weise wird für die erfindungsgemäße Anordnung erkennbar, daß es sinnvoll ist, einen im Fahrzeug verbliebenen ID-Geber aktiviert zu lassen und keine Tür-Verriegelung vorzunehmen. Es ist nämlich davon auszugehen, daß die im Fahrzeug verbliebene Person, wenn sie ein Quittungssignal abgeben kann, auch andere wesentliche Funktionen im Fahrzeug ausüben kann, unter Umständen mit dem Fahrzeug wegfahren will, so daß sich eine Tür-Verriegelung ebenso wie eine Deaktivierung des ID-Gebers erübrigen.

Wenn sich jedoch beispielsweise ein Kind oder ein Hund als Insasse im Fahrzeug befindet, welches vom Fahrer verlassen wurde, kann es erwünscht sein und dürfte in der Mehrzahl der Fälle auch zweckmäßig sein, den im Fahrzeug zurückgebliebenen ID-Geber zu deaktivieren und eine ordnungsgemäße Verriegelung der Fahrzeugtüren vorzunehmen. Mit anderen Worten, über das gemäß der Erfindung vorgesehene Quittungssignal kann eine Entscheidung darüber herbeigeführt werden, ob im Fahrzeug eine Person zurückgeblieben ist, welche allgemein die Verantwortung für das Geschehen im Fahrzeug übernehmen kann, oder ob es sich um ein Kind oder einen Hund handelt, die von dem ID-Geber ohnehin keinen Gebrauch machen können und auch zur Sicherheit derart im Fahrzeug untergebracht werden sollen, daß sie von außen nicht belästigt werden können.
Gemäß einer weiteren vorteilhaften Ausgestaltung der Erfindung ist vorgesehen, daß beim Öffnen der Tür-Verriegelungsvorrichtung durch die erste Fembedienungseinrichtung die zweite Fernbedienungseinrichtung wieder aktiviert wird. Wenn sich an einem abgestellten oder geparkten Fahrzeug niemand zu schaffen gemacht hat und der Fahrer und/oder ein Beifahrer zum Fahrzeug zurückkommen, wird also beim Entriegeln des Fahrzeuges der im Fahrzeug verbliebene zweite ID-Geber wieder aktiviert, so daß beispielsweise ein Beifahrer das Fahrzeug mit dem zweiten ID-Geber später noch benutzen kann.

Gemäß der Erfindung wird somit in flexibler Weise allen denkbaren Fall-Gestaltungen Rechnung getragen, die sich dadurch ergeben können, daß einerseits außer dem aus einem Fahrzeug entfernten ersten ID-Geber weitere ID-Geber im Fahrzeug zurückgelassen werden und/oder dabei Insassen unterschiedlicher Qualifikation sich im Fahrzeug befinden können.

Für die Erkennung von Insassen im Fahrzeug bieten sich verschiedene Möglichkeiten an, es können dazu beispielsweise Bewegungsdetektoren, Sitzerkennungsmaßnahmen, Sitzmatten, Geruchsveränderungen oder andere im Fahrzeug bereits vorhandene Erkennungseinrichtungen genutzt werden.

Eine weitere vorteilhafte Ausgestaltung der erfindungsgemäßen Anordnung sieht vor, daß die Alarmanlage immer scharfgeschaltet wird, wenn die Tür-Verriegelungsvorrichtung geschlossen ist, wobei vorzugsweise die Anordnung derart getroffen sein kann, daß die Alarmanlage nur dann scharfgeschaltet wird, wenn beim Schließen der Tür-Verriegelungsvorrichtung kein Insasse im Fahrgastraum erkannt wird. Gemäß dieser Ausgestaltung der Erfindung wird der Vorteil erreicht, daß ohne Zutun des Fahrers ein abgestelltes Fahrzeug, in welchem sich keine Insassen befinden, durch Einschalten einer eventuell vorhandenen Alarmanlage gegen Eingriffe von außen gesichert wird.

Eine weitere Diebstahlssicherung kann gemäß einer alternativen Ausgestaltung der Erfindung dadurch erreicht werden, daß durch die logische Schaltung über die Verriegelungsvorrichtung die Zündanlage des Fahrzeugs blockierbar ist, wobei vorzugsweise vorgesehen werden kann, daß die Zündanlage stets blockiert wird, wenn die Tür-Verriegelungsvorrichtung geschlossen ist. Dadurch kann mit der erfindungsgemäßen Anordnung eine zuverlässige Wegfahrsperre auf relativ einfache Weise realisiert werden.

Schließlich kann gemäß einer weiteren vorteilhaften Weiterbildung der Erfindung vorgesehen sein, daß durch die logische Schaltung über die Verriegelungsvorrichtung das Lenkradschloß des Fahrzeugs verriegelbar ist, wobei vorzugsweise vorgesehen ist, daß das Lenkradschloß stets verriegelt wird, wenn die Tür-Verriegelungsvorrichtung geschlossen ist. Eine solche Maßnahme bietet sich für den Fall an, daß ein besonders hohes Maß an Sicherheit angestrebt wird oder andere Maßnahmen zur Realisierung einer wirksamen Wegfahrsperre nicht ohne weiteres realisiert werden könnten.

Zur weiteren Veranschaulichung der Erfindung soll eine technische Konstellation kurz beschrieben werden, die bei heutigen Fahrzeugen realistisch ist: Wenn ein Fahrzeug in gesichertem Zustand, bei dem die Türen verriegelt sind und eine Alarmanlage scharfgeschaltet ist, mittels einer Funkfernbedienung entriegelt wird, so wird dann, wenn innerhalb von 30 sec keine Tür oder der Kofferraumdeckel geöffnet wird, das System in den Zustand gebracht, der vor dem Funkbefehl vorlag. Dies bedeutet, daß die Türen verriegelt werden und die Alarmanlage scharfgeschaltet wird. Daraus kann sich folgende Problematik ergeben. Wenn ein Fahrer aus dem Fahrzeug aussteigt und das Fahrzeug mittels Fernbedienung verriegelt, dann aber feststellt, daß sich noch Mitfahrer, beispielsweise Kinder, im Fahrzeug befinden, so wird er das Fahrzeug wieder entriegeln. Nach 30 sec oder einer anderen einstellbaren Zeit führt die oben geschilderte technische Ausgestaltung dazu, daß die Tür-Verriegelung automatisch herbeigeführt wird und dadurch die Insassen im Fahrzeug eingesperrt sind.

Aus der oben niedergelegten Beschreibung der Erfindung ergibt sich ohne weiteres, daß gemäß der Erfindung hier Abhilfe geschaffen ist. Wenn nämlich ein eventuell im Fahrzeug verbliebener zweiter ID-Geber ermittelt und auch Insassen im Fahrzeug erkannt werden, werden erfindungsgemäß durch die oben im Detail beschriebenen und erläuterten Maßnahmen alle denkbaren Fall-Gestaltungen so gemeistert, daß der im Fahrzeug verbliebene zweite ID-Geber nicht unbefugt benutzt und auch Fahrzeuginsassen nicht versehentlich eingesperrt werden können. Es wird vielmehr der im Fahrzeug verbliebene zweite ID-Geber unbrauchbar, wenn keine befugte Person im Fahrzeug ist, und er bleibt aktiv, wenn eine qualifizierte Person sich im Fahrzeug befindet. Weiterhin unterbleibt eine Verriegelung der Fahrzeugtüren und/oder eine Verriegelung weiterer Fahrzeugaggregate, und zwar in Abhängigkeit davon, welche Qualifikation die im Fahrzeug verbliebenen Insassen haben. Es wird eine solche Qualifikation gemäß der Erfindung sogar ermittelt, indem von den Fahrzeuginsassen die Abgabe eines Quittungssignals verlangt wird, so daß von einem qualifizierten Beifahrer ein solches Quittungssignal sicherlich ohne weiteres abgegeben werden kann, während ein Kind oder ein Hund kein Quittungssignal geben wird. Aus dieser Unterscheidung können gemäß der Erfindung dann die jeweils optimalen Maßnahmen im Zusammenhang mit einem ID-Geber und/oder einer Verriegelungsvorrichtung ergriffen werden.

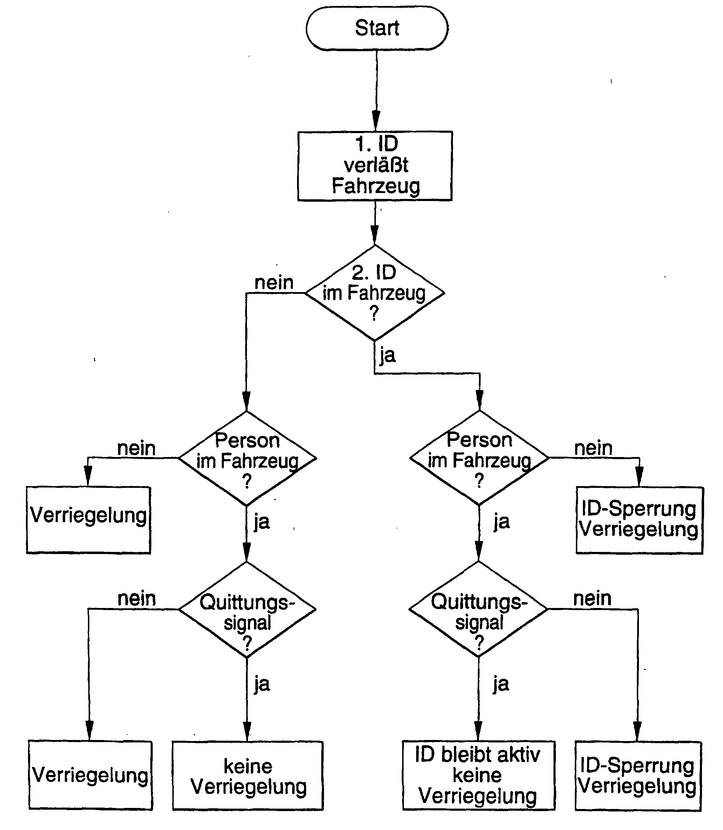

Die Erfindung wird nachfolgend beispielsweise anhand der Zeichnung beschrieben; in der Zeichnung zeigt die einzige Figur ein Flußdiagramm zur Veranschaulichung derjenigen Schritte, die in einem Ausführungsbeispiel des Erfindungsgegenstandes erfindungsgemäß ablaufen.

In einem ersten Schritt verläßt ein erster ID-Geber (Ferbedienungseinrichtung) ein Fahrzeug. Im Flußdiagramm ist der ID-Geber aus Platzgründen kurz als "ID" bezeichnet.

Im nächsten Schritt wird abgefragt, ob sich ein zweiter ID-Geber im Fahrzeug befindet. Wenn dies nicht der Fall ist, wird weiterhin abgefragt, ob sich noch eine Person im Fahrzeug befindet. Wenn dies auch nicht der Fall ist, wenn also weder ein zweiter ID-Geber noch ein Insasse im Fahrzeug zurückgeblieben sind, erfolgt eine Verriegelung. Auch im Ausführungsbeispiel ist mit "Verriegelung" allgemein eine Verriegelung eines Fahrzeugaggregates angesprochen. Insbesondere kann natürlich die Verriegelung von Fahrzeugtüren betroffen sein. Es kann jedoch, wie oben bereits ausgeführt wurde, von der Verriegelungsvorrichtung auch ein anderes Aggregat wie ein Lenkradschloß oder eine Zündanlage betätigt werden. Für das hier in Rede stehende Ausführungsbeispiel ist es zweckmäßig, zur Vereinfachung und zum leichteren Verständnis einer Tür-Verriegelung in Betracht zu ziehen.

Wenn bei der Abfrage festgestellt wird, daß sich noch eine Person im Fahrzeug befindet, wird im nächsten Schritt weiterhin abgefragt, ob innerhalb einer vorgegebenen Zeit ein Quittungssignal kommt. Ein solches Quittungssignal wird als Indiz dafür betrachtet, daß sich im Fahrzeug eine qualifizierte Person befindet. Es erübrigt sich dann eine Verriegelung der Fahrzeugtüren. Kommt kein Quittungssignal, kann daraus der Schluß gezogen werden, daß entweder keine Person im Fahrzeug ist oder sich nur beispielsweise ein Kind oder ein Hund im Fahrzeug befindet. Es kann dann eine Verriegelung der Fahrzeugtüren vorgenommen werden.

Wenn bei der ersten Abfrage jedoch festgestellt wird, daß sich ein zweiter ID-Geber im Fahrzeug befindet, erfolgt eine zweite Abfrage, um festzustellen, ob sich noch eine Person im Fahrzeug aufhält. Wenn dies nicht der Fall ist, wird der im Fahrzeug ermittelte zweite ID-Geber gesperrt, und es werden die Fahrzeugtüren verriegelt.

Wird jedoch eine Person oder allgemein ein Insasse im Fahrzeug erkannt, so wird in einem weiteren Schritt abgefragt, ob innerhalb der vorgegebenen Zeit ein Quittungssignal abgegeben wurde. Wenn kein Quittungssignal kommt, so ist damit festgestellt, daß sich zwar ein Insasse im Fahrzeug befindet, jedoch keine Person, die dazu in der Lage wäre, ein Quittungssignal abzugeben. Es wird sich dann vermutlich um ein Kind oder einen Hund oder einen Insassen handeln, der jedenfalls nicht qualifiziert ist, das Fahrzeug zu fahren oder Verantwortung für das Geschehen im Fahrzeug zu übernehmen. Es ist dann sinnvoll, den im Fahrzeug verbliebenen ID-Geber zu sperren und die Fahrzeugtüren zu verriegeln.

Wenn jedoch ein Quittungssignal ordnungsgemäß eingeht, ist der Schluß gerechtfertigt, daß sich im Fahrzeug eine qualifizierte Person aufhält, welche entweder das Fahrzeug fahren kann und möchte oder zumindest in der Lage ist, die Verantwortung für das weitere Geschehen im Fahrzeug zu übernehmen. Dann bleibt der im Fahrzeug festgestellte ID-Geber aktiv, und es erfolgt keine Verriegelung der Fahrzeugtüren.

Es sei darauf hingewiesen, daß die erfindungsgemäße Anordnung für ein Kraftfahrzeug besonders gut geeignet ist. Je nach technischer Ausgestaltung läßt sich die erfindungsgemäße Anordnung auch bei anderen Fahrzeugen sinnvoll anwenden.

Natürlich funktioniert die erfindungsgemäße Anordnung auch dann in der beschriebenen Weise, wenn außer einem zweiten ID-Geber eventuell weitere ID-Geber im Fahrzeug festgestellt werden. Es versteht sich, daß dann diese weiteren ID-Geber ebenso behandelt werden wie der oben näher beschriebene zweite ID-Geber.

Es bedarf sicherlich keiner weiteren Erläuterung dazu, daß für das Aussenden und das Empfangen des oben erläuterten Quittungssignals verschiedenste Möglichkeiten bestehen, die vom Fachmann bei Bedarf ohne weiteres genutzt werden können.

## Patentansprüche

1. Anordnung zur Steuerung einer Verriegelungsvorrichtung eines Fahrzeuges, durch welche Fahrzeugteile wie Türen, Kofferraumdeckel, Alarmanlage, Zündanlage, Lenkradschloß betätigbar sind, mit mindestens zwei tragbaren Fernbedienungseinrichtungen, durch welche die Verriegelungsvorrichtung steuerbar ist, mit einer Erkennungseinrichtung, durch welche ein Insasse im Fahrgastraum erkennbar ist, mit einer Sensoreinrichtung, durch welche eine tragbare Fernbedienungseinrichtung im Fahrzeug feststellbar ist, sowie mit einer Detektoreinrichtung, durch welche der Betriebszustand der Fahrzeugteile erfaßbar ist, **dadurch gekennzeichnet, daß** eine logische Schaltung vorgesehen ist, durch welche dann, wenn eine erste tragbare Fernbedienungseinrichtung aus dem Fahrzeug entfemt wurde und wenigstens eine zweite tragbare Fernbedienungseinrichtung im Fahrzeug registriert wird, die zweite tragbare Fernbedienungseinrichtung unter der Bedingung deaktiviert wird, daß kein Insasse im Fahrgastraum erkannt wird, während bei Anwesenheit eines Insassen im Fahrgastraum die zweite tragbare Fembedienungseinrichtung aktiviert bleibt.

2. Anordnung nach Anspruch 1, **dadurch gekennzeichnet, daß** die logische Schaltung derart ausgelegt ist, daß durch die erste tragbare Fernbedienungseinrichtung eine Tür-Verriegelungsvorrichtung schließbar ist, wenn die erste tragbare Fembedienungseinrichtung aus dem Fahrzeug entfernt wurde.

3. Anordnung nach Anspruch 2, **dadurch gekennzeichnet, daß** die Tür-Verriegelungsvorrichtung geschlossen wird, wenn kein Insasse im Fahrgastraum erkannt wird.

4. Anordnung nach Anspruch 2, **dadurch gekennzeichnet, daß** die Tür-Verriegelungsvorrichtung geschlossen wird, wenn ein Insasse im Fahrgastraum erkannt und der logischen Schaltung innerhalb einer vorgebbaren Zeit von dem Insassen kein Quittungssignal zugeführt wird.

5. Anordnung nach einem der Ansprüche 3 oder 4, **dadurch gekennzeichnet, daß** beim Öffnen der Tür-Verriegelungsvorrichtung durch die erste Fernbedienungseinrichtung die zweite Fernbedienungseinrichtung wieder aktiviert wird.

6. Anordnung nach einem der vorhergehenden Ansprüche, **dadurch gekennzeichnet, daß** durch die logische Schaltung über die Verriegelungsvorrichtung eine Alarmanlage scharfzuschalten ist, durch die bei einer vorgebbaren Einwirkung auf das Fahrzeug von außen Alarm ausgelöst wird.

7. Anordnung nach Anspruch 6, **dadurch gekennzeichnet, daß** die Alarmanlage immer scharfgeschaltet wird, wenn die Tür-Verriegelungsvorrichtung geschlossen ist.

8. Anordnung nach Anspruch 6, **dadurch gekennzeichnet, daß** die Alarmanlage nur dann scharfgeschaltet wird, wenn beim Schließen der Tür-Verriegelungsvorrichtung kein Insasse im Fahrgastraum erkannt wird.

9. Anordnung nach einem der vorhergehenden Ansprüche, **dadurch gekennzeichnet, daß** durch die logische Schaltung über die Verriegelungsvorrichtung die Zündanlage des Fahrzeugs blockierbar ist.

10. Anordnung nach Anspruch 9, **dadurch gekennzeichnet, daß** die Zündanlage stets blockiert wird, wenn die Tür-Verriegelungsvorrichtung geschlossen ist.

11. Anordnung nach einem der vorhergehenden Ansprüche, **dadurch gekennzeichnet, daß** durch die logische Schaltung über die Verriegelungsvorrichtung das Lenkradschloß des Fahrzeugs verriegelbar ist.

12. Anordnung nach Anspruch 11, **dadurch gekennzeichnet, daß** das Lenkradschloß stets verriegelt wird, wenn die Tür-Verriegelungsvorrichtung geschlossen ist.

## Claims

1. Arrangement for controlling a locking apparatus for a vehicle, by means of which vehicle parts such as doors, boot lids, an alarm system, the ignition system, and the steering wheel lock can be operated, having at least two portable remote control devices, by means of which the locking apparatus can be controlled, having an identification device by means of which an occupant in the passenger compartment can be identified, having a sensor device by means of which a portable remote control device can be detected in the vehicle, and having a detector device by means of which the operating state of the vehicle parts can be detected, **characterized in that** a logic circuit is provided, by means of which, when a first portable remote control device has been removed from the vehicle and at least one second portable remote control device is registered in the vehicle, the second portable remote control device is deactivated subject to the condition that no occupants are identified in the passenger compartment, while the second portable remote control device remains activated if an occupant is present in the passenger compartment.

2. Arrangement according to Claim 1, **characterized in that** the logic circuit is designed such that a door locking apparatus can be closed by the first portable remote control device when the first portable remote control device has been removed from the vehicle.

3. An arrangement according to Claim 2, **characterized in that** the door locking apparatus is closed when no occupants are identified in the passenger compartment.

4. Arrangement according to Claim 2, **characterized in that** the door locking apparatus is closed when one occupant is identified in the passenger compartment and the logic circuit is not supplied with an acknowledgement signal from the occupant within a time which can be predetermined.

5. Arrangement according to one of Claims 3 or 4, **characterized in that,** when the door locking apparatus is opened by the first remote control device, the second remote control device is activated once again.

6. Arrangement according to one of the preceding claims, **characterized in that** an alarm system can be armed by the logic circuit via the locking apparatus, which alarm system triggers an alarm externally in response to an influence, which can be predetermined, on the vehicle.

7. Arrangement according to Claim 6, **characterized in that** the alarm system is always armed when the door locking apparatus is closed.

8. Arrangement according to Claim 6, **characterized in that** the alarm system is armed only when no occupants are identified in the passenger compartment during closing of the door locking apparatus.

9. Arrangement according to one of the preceding claims, **characterized in that** the ignition system of the vehicle can be blocked by the logic circuit via the locking apparatus.

10. Arrangement according to Claim 9, **characterized in that** the ignition system is always blocked when the door locking apparatus is closed.

11. Arrangement according to one of the preceding claims, **characterized in that** the steering wheel lock of the vehicle can be locked by the logic circuit via the locking apparatus.

12. Arrangement according to Claim 11, **characterized in that** the steering wheel lock is always locked when the door locking apparatus is closed.

## Revendications

1. Dispositif de commande d'un dispositif de verrouillage d'un véhicule, permettant de commander des parties de véhicule telles que des portes, le couvercle du coffre à bagages, le système d'alarme, le système d'allumage et l'antivol sur la direction, comprenant au moins deux dispositifs de télécommande portables qui peuvent commander le dispositif de verrouillage, un dispositif de reconnaissance qui peut identifier la présence d'un occupant dans l'habitacle du véhicule, un dispositif capteur qui permet de détecter un dispositif de télécommande portable dans le véhicule, ainsi qu'un dispositif détecteur qui peut saisir l'état de fonctionnement des parties du véhicule, **caractérisé en ce qu'**il est prévu un circuit logique par lequel, lorsqu'un premier dispositif de télécommande portable a été éloigné du véhicule et lorsque au moins un second dispositif de télécommande portable est enregistré dans le véhicule, le second dispositif de télécommande portable est désactivé à condition que la présence d'aucun occupant ne soit identifiée dans l'habitacle du véhicule, tandis qu'en présence d'un occupant dans l'habitacle du véhicule, le second dispositif de télécommande portable reste activé.

2. Dispositif selon la revendication 1, **caractérisé en ce que** le circuit logique est conçu de façon qu'un dispositif de verrouillage de portes puisse être fermé par le premier dispositif de télécommande portable lorsque le premier dispositif de télécommande portable a été éloigné du véhicule.

3. Dispositif selon la revendication 2, **caractérisé en ce que** le dispositif de verrouillage de portes est fermé lorsque la présence d'aucun occupant n'est identifiée dans l'habitacle du véhicule.

4. Dispositif selon la revendication 2, **caractérisé en ce que** le dispositif de verrouillage de portes est fermé lorsque la présence d'un occupant a été identifiée dans l'habitacle du véhicule et qu'aucun signal d'acquittement n'a été envoyé au circuit logique par l'occupant dans un espace de temps prédéterminable.

5. Dispositif selon l'une quelconque des revendications 3 ou 4, **caractérisé en ce que**, lors de l'ouverture du dispositif de verrouillage de portes par le premier dispositif de télécommande, le second dispositif de télécommande est à nouveau activé.

6. Dispositif selon l'une quelconque des revendications précédentes, **caractérisé en ce qu'**un système d'alarme, qui permet de déclencher une alarme lors d'une intervention prédéterminable sur le véhicule de l'extérieur, peut être activé par le circuit logique via le dispositif de verrouillage.

7. Dispositif selon la revendication 6, **caractérisé en ce que** le système d'alarme est toujours activé lorsque le dispositif de verrouillage de portes est fermé.

8. Dispositif selon la revendication 6, **caractérisé en ce que** le système d'alarme n'est activé que lorsque la présence d'aucun occupant n'est identifiée dans l'habitacle du véhicule lors de la fermeture du dispositif de verrouillage de portes.

9. Dispositif selon l'une quelconque des revendications précédentes, **caractérisé en ce que** le système d'allumage du véhicule peut être bloqué par le circuit logique via le dispositif de verrouillage.

10. Dispositif selon la revendication 9, **caractérisé en ce que** le système d'allumage est toujours bloqué lorsque le dispositif de verrouillage de portes est fermé.

11. Dispositif selon l'une quelconque des revendications précédentes, **caractérisé en ce que** l'antivol sur la direction du véhicule peut être verrouillé par le circuit logique via le dispositif de verrouillage.

12. Dispositif selon la revendication 11, **caractérisé en ce que** l'antivol sur la direction est toujours verrouillé lorsque le dispositif de verrouillage de portes est fermé.
